# EUROPEAN PATENT APPLICATION

(11) **EP 2 333 997 A1**
(43) Date of publication of application: **15.06.2011**
(21) Application number: 09290939.9
(22) Date of filing: 14.12.2009
(51) Int. Cl.: H04L 1/00, H04L 1/18, H04L 25/14, H04L 29/06

(54) **Method of dispersity transmitting a piece of information**

(71) Applicant: Alcatel Lucent, 75008 Paris (FR)
(72) Inventor: Tangemann, Michael, 71229 Leonberg (DE); Klotsche, Ralf, 75305 Neuenbuerg (DE)
(74) Representative: LOUIS, PÖHLAU, LOHRENTZ

(57) **Abstract**

The invention concerns a method of transmitting a piece of information, as well as a sender (1) and a receiver (2) to execute this method. The piece of information is to be transmitted from the sender (1) to the receiver (2) through a communication network (100) comprising N at least partly disjoint transmission paths (P1, P2, P3), wherein N is an integer with N > 2. Encoded information is generated by adding redundancy information to the piece of information. The encoded information is split into N subsets of encoded information in a way that the piece of information can only be decoded from a combination of M subsets of the N subsets, wherein M is an integer with 1 < M < N. Each of the N subsets of encoded information is sent via a different path of the N at least partly disjoint transmission paths (P1, P2, P3) from the sender (1) to the receiver (2). The receiver (2) receives M subsets of the N subsets of encoded information. The piece of information is decoded from a combination of the received M subsets of encoded information.

## Description

The present invention relates to a method of transmitting a piece of information through a communication network, and a sender and a receiver to execute said method.

There is a variety of methods, e.g. encryption and ciphering key management, to protect the privacy of piece of information transmitted from a sender to a receiver. Yet these methods are never perfectly secure since there may be more and more powerful hardware and software to break the encryption and illegally read the information. Furthermore there may be shortcomings due to indiscretion where a person illegally passes on security information.

Often transmission channels are congested or even totally interrupted, resulting in a limited reliability of transmission through a communication network. This limited transmission reliability is particularly valid for internet routes.

For the Internet, priority mechanisms (DiffServ = Differentiated Services, Reservation) have been defined which could theoretically be used to improve delay jitters. However they are rarely used. Thus there exists a need for improved method dealing with delay variations in the information transfer.

It is the object of the present invention to provide an improved method and improved devices for transmitting a piece of information through a communication network.

The object of the present invention is achieved by a method of transmitting a piece of information from a sender to a receiver through a communication network comprising N at least partly disjoint transmission paths wherein N is an integer with N >2 (N equal to or greater than two), the method comprising the steps of generating encoded information by adding redundancy information to the piece of information; splitting the encoded information into N subsets of encoded information in a way that the piece of information can only be decoded from a combination of M subsets of the N subsets wherein M is an integer with 1 < M < N (M greater than one, and N equal to or greater than M); sending each of the N subsets of encoded information via a different path of the N at least partly disjoint transmission paths from the sender to the receiver; receiving M subsets of the N subsets of encoded information by the receiver; and decoding the piece of information from a combination of the received M subsets of encoded information. The object of the present invention is further achieved by a sender for transmitting of a piece of information to a receiver through a communication network comprising N at least partly disjoint transmission paths wherein N is an integer with N ≥ 2, the sender comprising a control unit adapted to generate encoded information by adding redundancy information to the piece of information and split the encoded information into N subsets of encoded information in a way that the piece of information can only be decoded from a combination of M subsets of the N subsets wherein M is an integer with 1 < M < N, and one or more interfaces adapted to send each of the N subsets of encoded information via a different path of the N at least partly disjoint transmission paths from the sender to the receiver. The object of the present invention is further achieved by a receiver for receiving a piece of information from a sender through a communication network comprising N at least partly disjoint transmission paths wherein N is an integer with N > 2, the receiver comprising one or more interfaces adapted to receive M subsets of N subsets of encoded information wherein M is an integer with 1 < M < N, wherein the N subsets of encoded information comprise the piece of information and added redundancy information in a way that the piece of information can only be decoded from a combination of M subsets of the N subsets, and wherein each of the M subsets of encoded information is received via a different path of the N at least partly disjoint transmission paths, and a control unit adapted to decode the piece of information from a combination of the received M subsets of encoded information.

The sender and the receiver may be used as inter-related devices. It is possible that the sender and the receiver each performs the corresponding steps, appropriate to a sender or a receiver, of the method according to the present invention.

Generally, the present invention comprises the case M=N. In this case, each of the N subsets generated and sent by the sender has to reach the receiver so that the receiver is able to decode the piece of information. In this case N=M there is an improved privacy because none of the N=M subsets alone is sufficient to decode the piece of information. Only in case an eavesdropper is able to intercept all N=M subsets transmitted via the N different transmission paths, they can decode the piece of information. The case M=N also comprises the special case N=M=2. In this case N=M=2 one could even conceive simplified methods which are not covered by the present invention, e.g. by simply splitting the piece of information into N=2 subsets without adding redundancy information to the piece of information (improvement of privacy), or by simply splitting the piece of encoded information into N=2 equal subsets (equivalent to M=1) (improvement of transmission reliability and decrease of delay jitter).

Preferably, the term "reliability" is meant in a sense of "transmission reliability" or "safeguarding against failure" (of a network resource).

According to an embodiment of the invention, N > 2 (N greater than two) and 1 < M < N (M greater than one, and N greater than M). In this case, as in the aforementioned case N=M, there is an improved privacy because none of the N subsets alone is sufficient to decode the piece of information. Only in case an eavesdropper is able to intercept M subsets transmitted via M different transmission paths, they can decode the piece of information. In case N > 2 and 1 < M < N, in addition to an improvement of privacy there is an improved reliability and an improved (= decreased) delay jitter because N-M subsets (at least one subset) generated and sent by the sender may fail to reach the receiver, and still the receiver is able to decode the piece of information from a combination of M received subsets.

The invention may combine the following elements:
1.) The piece of information is transmitted on several paths that use different resources (e.g. links and routers) of the communication network. The piece of information is not replicated on each path, instead on each path a separate subset of the piece of information is transmitted.
2.) The piece of information is encoded and structured into subsets for each path, with the following properties a) and b):
   a) The receiver is able to recover the original piece of information even if not all the subsets are received at the receiver. The receiver starts decoding the piece of information from received subsets as soon as a sufficiently large number M < N of subsets is received.
   b) It is not possible to recover the original piece of information by reading a single subset, i.e. at least two subsets are needed to recover the piece of information.

The step of encoding the information and structuring the subsets for each path may take benefit of coding techniques used for Incremental Redundancy (= IR) in advanced wireless standards, or any other suitable method.

Embodiments of the present invention provide a great deal of benefits. With regard to privacy, due to the aforementioned property b) of the encoding scheme it is not possible to intercept the piece of information in those parts of the communication network where each of the N subsets of encoded information is transmitted via a disjoint path of the N at least partly disjoint transmission paths. With regard to reliability, due to aforementioned property a) of the encoding scheme, a number N-M of the N at least partly disjoint transmission paths may fail without negatively affecting the transmission of the piece of information, i.e. the communication is still reliable. With regard to delay jitter, due to the aforementioned property a) of the encoding scheme a number N-M of the N at least partly disjoint transmission paths may have unexpected delays without impacting the delay of the overall communication, since the receiver is able to decode the piece of information as soon as the first M information subsets are received.

The present invention suggests a method that allows to obtain improvements of the delay jitter with or without known priority mechanism such as DiffServ or Reservation. The invention makes use of multiple paths for transmitting information which is a new approach in fixed communication systems.

By adding redundancy information to the piece of information, it may be easier to detect errors in the transmitted subsets.

The present invention can be used with a variety of network devices, such as DSLAM (= Digital Subscriber Line Access Multiplexer) and router products.

Further advantages are achieved by embodiments of the invention indicated by the dependent claims.

According to an embodiment of the invention, the N subsets of encoded information are sent parallelly (= in parallel) via the N different at least partly disjoint transmission paths from the sender to the receiver. Preferably, the term "parallel" is meant in a sense of one or more of the following terms: "involving operations of different network resources at the same time", "concurrently", "at the same time". A parallel sending according to the present invention is in contrast to a sequential (= successive in time, one after another) sending as known with Hybrid Automatic Repeat Request (= Hybrid ARQ, HARQ) or IR. According to HARQ/IR, information subsets (e.g. information blocks) are not sent parallelly in time but temporally sequentially on the same transmission channel. According to HARQ/IR, the temporally sequential transmission of information subsets is executed only if the information received by the receiver can not yet be decoded and further information is required at the receiver in order to enable a decoding. This is in contrast to the present invention where always all N subsets are sent. According to HARQ/IR, it is in principle possible that the piece of information to be transmitted can already be decoded after receipt of a first subset by the receiver so that no further subset has to be transmitted from the sender to the receiver. This is in contrast to the present invention where at least M=2 subsets are required. Thus, HARQ may provide an improved quality with poor radio connections, however no reliability in case the radio connections is completely aborted, no privacy, and a worsening of delay jitter instead of an improvement of delay jitter.

According to an embodiment of the invention, the communication network is an end-to-end network comprising fixed and/or mobile sub-networks. A fixed subnetwork comprises networks which are not a cellular mobile communication network. It is possible that the communication network is the Internet or an evolution towards Future Internet. The communication network according to the present invention may comprise one or more fixed sub-networks. The communication network according to the present invention may comprise one or more mobile sub-networks. The communication network according to the present invention may also comprise a combination of one or more fixed sub-networks and one or more mobile sub-networks. The communication network according to the present invention may extend across several physical networks or domains. This is in contrast to HARQ/IR which is restricted to usage with an air interface of a mobile radio network.

According to an embodiment of the invention, the encoded information is generated and the encoded information is split into N subsets by using an algorithm or a technique used for Forward Error Correction (= FEC), for HARQ, or for RAID (= Redundant Array of Independent Disks), in particular RAID5, or any other suitable method. Although an algorithm or a technique used for RAID may also be advantageously applied to the present invention, the present invention is contrast to RAID itself. RAID exclusively refers to data storage, provides advantages regarding storage reliability and, as the case may be, gains in speed when a large amount of data must be transferred. However, RAID does not provide for privacy or safety from interception.

In an embodiment, the method comprises the steps of establishing the N at least partly disjoint transmission paths between the sender and the receiver, that establishing preferably triggered by the control unit of the sender. It is possible that one or more management activities and/or signalling procedures associated with a communication system are necessary to establish, maintain and/or terminate/release the required number of N communication/ transmission paths. It is possible that these management activities and/or signalling procedures comprise one or more of the following elements:
- Receiving an incoming transmission request regarding the piece of information at a sender (= a communication source).
- Identifying, preferably by a control unit of a sender, a receiver (= a communication endpoint).
- Identifying, preferably by a control unit of a sender, a set of candidate transmission paths for a transmission of the piece of information between a communication source and a communication endpoint, taking into account the criterion that the transmission paths have to be at least partly disjoint.
- Selecting, preferably by a control unit of a sender, N at least partly disjoint transmission paths out of a set of candidate transmission paths.
- Initiating, preferably by a control unit of a sender, a reservation of N selected at least partly disjoint transmission paths (if required by an underlying protocol).
- Triggering, preferably by a control unit of a sender, a start of a communication between a communication source and a communication endpoint. The communication source may trigger an exchange of messages between the communication source and the communication endpoint to establish communication links via each of the N selected at least partly disjoint transmission paths.
- Initiating, preferably by a control unit of a sender, a transmission of N subsets of encoded information through N selected at least partly disjoint transmission paths.
- Terminating, preferably by a control unit of a sender, a communication between a communication source and a communication endpoint.
- Triggering, preferably by a control unit of a sender, a release of N selected at least partly disjoint transmission paths (if required by an underlying protocol).

An underlying protocol of the present invention may be IP (= Internet Protocol) for data transport or SIP (= Session Initiation Protocol) for signalling.

The communication network comprises N transmission paths for the transmission of the piece of information between the sender and the receiver. A transmission path for the transmission of the piece of information between the sender and the receiver may exclusively use network resources (links, connections, networks, routers, etc) which are not used by any other transmission paths for the transmission of the piece of information between the sender and the receiver. In this case the transmission path is a completely disjoint transmission path. A completely disjoint transmission path provides a relatively high degree of privacy because an interception of a completely disjoint transmission path by an eavesdropper provides the eavesdropper with only a single subset. However, in order to be able to decode the piece of information, the eavesdropper must have available M (at least two) subsets.

Alternatively it is possible that a transmission path for the transmission of the piece of information between the sender and the receiver comprises a) one or more disjoint path sections wherein network resources are used which are not used by any other transmission paths, and b) one or more joint path sections wherein network resources are used which are also used by other transmission paths. In this case the transmission path is a partly disjoint transmission path. Compared to the above mentioned completely disjoint transmission path, a partly disjoint transmission path provides a lower degree of privacy because an interception of a joint path section of a partly disjoint transmission path by an eavesdropper provides the eavesdropper with at least two subsets. Thus, as the case may be, the eavesdropper may already be able to decode the piece of information (in case M=2).

According to an embodiment of the invention, each of the N at least partly disjoint transmission paths is at least in a section of the transmission path associated with separate network resources, e.g. sub-networks, links, routers. According to an embodiment of the invention, at least a section of each of the N at least partly disjoint transmission paths comprises different network resources, e.g. sub-networks, links, routers. That means that at least a section of each of the N at least partly disjoint transmission paths makes use of network resources of the communication network of which no other transmission path of the N at least partly disjoint transmission paths makes also use.

The disjoint parts (= sections) of the N at least partly (= sectionally) disjoint transmission paths do not overlap, i.e. are not correlated regarding network resources.

According to an embodiment of the invention, the sender and/or the receiver is a user terminal, e.g. a mobile phone or a PC (= Personal Computer), or an internal (=network-internal, in contrast to a user-operated device or a user terminal) network device, i.e. not operated and/or accessible by an end user, e.g. a DSLAM.

These as well as further features and advantages of the invention will be better appreciated by reading the following detailed description of exemplary embodiments taken in conjunction with accompanying drawings of which:
- Fig. 1: is a diagram illustrating a transmission of information through a communication network according to an embodiment of the invention;
- Fig. 2: is a diagram illustrating an encoding and a decoding technique of a piece of information according to an embodiment of the invention message;
- Fig. 3: is a diagram illustrating a transmission of information through a communication network according to another embodiment of the invention;
- Fig. 4: is a diagram illustrating a transmission of information through a communication network according to another embodiment of the invention; and
- Fig. 5: is a message flow diagram illustrating a transmission of information through the communication network of Fig. 1.

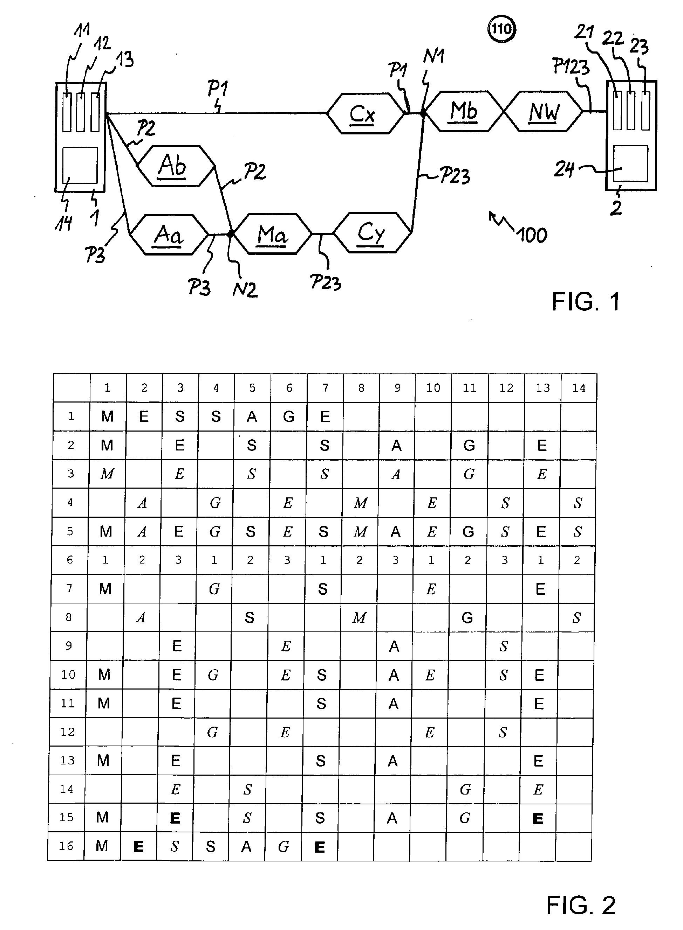

Fig. 1 schematically illustrates a packet-based communication network 100, e.g. a part of the Internet in an open flow context. A sender 1 is connected via a multitude of sub-networks Aa, Ab, Cx, Cy, Ma, Mb, NW with a receiver 2. The communication network 100 comprises three partly disjoint transmission paths P1, P2, P3 between the sender 1 and the receiver 2. The first path P1 is a disjoint network path in its section between the sender 1 and a first network node N1 through a first core network Cx and is a joint network path in its section between the first network node N1 and the receiver 2, i.e. the first path P1 is a partly disjoint network path between the sender 1 and the receiver 2. The second path P2 is a disjoint network path in its section between the sender 1 and a second network node N2 through a second access network Ab and is a joint network path in its section between the second network node N2 and the receiver 2, i.e. the second path P2 is a partly disjoint network path between the sender 1 and the receiver 2. The third path P3 is a disjoint network path in its section between the sender 1 and the second network node N2 through a first access network Aa and is a joint network path in its section between the second network node N2 and the receiver 2, i.e. the third path P3 is a partly disjoint network path between the sender 1 and the receiver 2. In their disjoint sections, the paths P1, P2, P3 use separate resources of the communication network 100, e.g. separate links, routers and sub-networks. In their joint sections, the paths P1, P2, P3 use common resources of the communication network 100, e.g. common links, routers and sub-networks. The second access network Ab can be a LTE (= Long Term Evolution) network. The first access network Aa can be a DSL (= Digital Subscriber Line) network.

The second network node N2 and the first network node N1 are connected by means of a fourth link P23 which commonly carries the joint sections of the second path P2 and the third path P3 through a first metro network Ma and a second core network Cy. The first network node N1 and the receiver 2 are connected by means of a fifth link P123 which commonly carries the joint sections of the first path P1, the second path P2, and the third path P3 through a second metro network Mb and a further network NW.

The paths P1, P2, P3 through the sub-networks Aa, Ab, Cx, Cy, Ma, Mb, NW may comprise wire-line links and wireless links. The sender 1 and the receiver 2 may be user terminals, e.g. personal computers, linked to the Internet 100. The sender 1 comprises three interfaces 11, 12, 13 and a control unit 14. The receiver 2 comprises three interfaces 21, 22, 23 and a control unit 24.

The control unit 14 of the sender 1 and the control unit 24 of the receiver 2 each is composed of one or several inter-linked computers, i.e. a hardware platform, a software platform basing on the hardware platform and several application programs executed by the system platform formed by the software and hardware platform. The functionality of the sender 1 and of the receiver 2 are provided by the execution of these application programs. The application programs or a selected part of these application programs constitute a computer software product providing a transmission service as described in the following, when executed on the system platform. Further, such computer software product is constituted by a storage medium storing these application programs or said selected part of application programs.

Due to the fact that the first network node N1 is shared by all three the connections P1, P2, P3 and the second node N2 is shared by the two connections P2, P3, the paths P1, P2, P3 are only partially disjoint, and the benefits achievable by the present invention are not fully achieved in every part of the paths P1, P2, P3. Thus it is advantageous if the commonly used parts P23 and P123 of the paths P1, P2, P3 belong to a trusted network in which the probability of interception or failure is low.

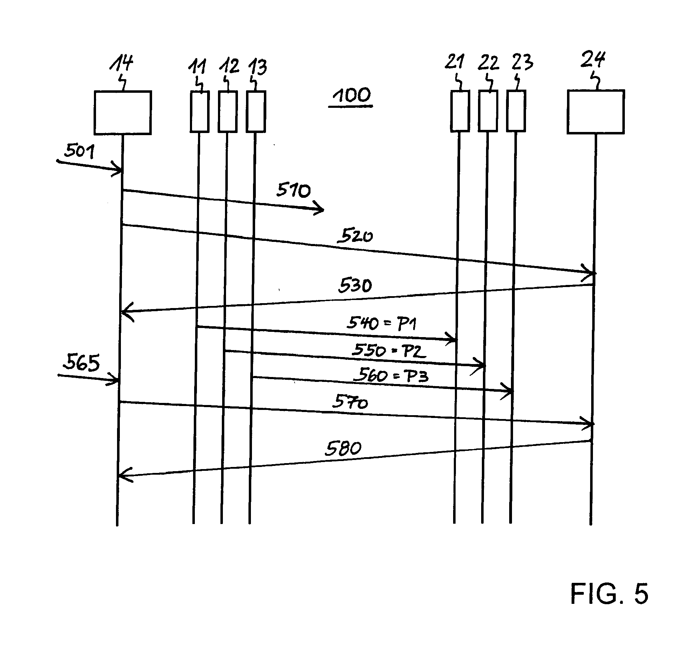

Fig. 5 shows a message flow diagram illustrating a transmission of information through the communication network of Fig. 1. The control unit 14 of the sender 1 receives an incoming transmission request 501 specifying a piece of information to be transmitted and a target receiver 2 of the piece of information. In case the sender 1 and the receiver 2 are personal computers and the piece of information to be transmitted is an email, the transmission request 501 may be generated by a VolP application running on the sender 1 after a user selects a transmission option in the email application (VolP = Voice over IP).

The control unit 14 identifies the receiver 2 of the email, e.g. in form of an email address indicated by the user in the transmission request 501. The control unit 14 identifies a set of candidate transmission paths for a transmission of the piece of information to the receiver 2, taking into account criterion that the transmission paths have to be at least partly disjoint. The control unit 14 may determine how many at least partly disjoint network paths are available between the sender 1 and the receiver 2.

It is possible that the identification of the set of candidate transmission paths comprises a request 510 of routing information and network availability information from one or more network nodes, e.g. from a central management entity which is aware of the structure of the communication network 100. In this case the request 510 is issued by the control unit 14 of the sender 1 and directed to the one or more network nodes, and the one or more network nodes provide the control unit 14 with a set of candidate transmission paths. It is possible that the identification step is supported by IMS (= IP Multimedia Subsystem), e.g. that the request 510 is a protocol function supported by IMS.

It is possible that the identification of the set of candidate transmission paths comprises an execution of autonomously operating routing functions. Preferably, the control unit 14 of the sender 1 "knows" the interfaces 11, 12, 13 so that a minimally extended SIP protocol may cover handshakes 520, 530, 570, 580. It is possible that an operating system of the sender 1 "knows" each of the interfaces 11, 12, 13 and permits SIP an assignment (by means of different IP addresses).

The control unit 14 selects N at least partly disjoint transmission paths out of the identified set of candidate transmission paths. If required by an underlying protocol used for a transmission, the control unit 14 initiates a reservation of the N selected at least partly disjoint transmission paths.

The control unit 14 of the sender 1 triggers a start of a communication between the sender 1 and the receiver 2 by sending a communication set-up message 520 to the receiver 2, preferably via each of the N selected at least partly disjoint transmission paths. After receipt of the communication set-up message 520 at the receiver 2, the receiver 2 responds by sending a communication set-up acknowledgment message 530 to the sender 1, preferably via each of the N selected at least partly disjoint transmission paths.

The control unit 14 of the sender 1 generates encoded information by adding redundancy information to the piece of information specified in the transmission request 501 and splits the encoded information into N subsets of encoded information in a way that the piece of information can only be decoded from a combination of at least M=2 of the N subsets.

When communication links via each of the available at least partly disjoint transmission paths P1, P2, P3 are established, the control unit 14 of the sender 1 initiates a transmission 540, 550, 560 of the N subsets of encoded information through the N selected at least partly disjoint transmission paths P1, P2, P3. It is possible that each communication link associated with one of the available at least partly disjoint transmission paths P1, P2, P3 is established via a different interface of the one or more interfaces 11, 12, 13 of the sender 1 and a corresponding different interface of the one or more interfaces 21, 22, 23 of the receiver 2. If provided in the underlying protocol, the receiver 2 acknowledges the transmissions 540, 550, 560 of the N subsets of encoded information. Typically, the sending of subsets is repeated until the entire information to be transmitted has been transferred to the receiver 2.

After transmission of the N subsets of encoded information from the sender 1 to the receiver 2, the control unit 14 of the sender 1 triggers a termination of the communication between the sender 1 and the receiver 2 by sending a communication termination message 570 to the receiver 2, preferably via each of the N selected at least partly disjoint transmission paths. It is also possible that the control unit 14 of the sender 1 receives an incoming termination request 565 which prompts the control unit 14 of the sender 1 to trigger the termination of the communication.

After receipt of the communication termination message 570 at the receiver 2, the receiver 2 responds by sending a communication termination acknowledgment message 580 to the sender 1, preferably via each of the N selected at least partly disjoint transmission paths.

After receiving the communication termination acknowledgment message 580 from the receiver 2, the control unit 14 of the sender 1 may trigger a release of the N selected at least partly disjoint transmission paths, if required by the underlying communication protocol.

To illustrate the effects of the present embodiment of the invention, the following exemplary cases may be considered:
a) If the first transmission path P1 is interrupted in its disjoint section, e.g. because a node fails in the first core network Cx, there are still the second path P2 and the third path P3 available, and the connection between the endpoints 1, 2 is still working because the encoded information subsets transmitted over the intact second path P2 and the intact third path P3 are sufficient for decoding the piece of information.
b) If the second transmission path P2 and the third transmission path P3 are interrupted in their joint section P23, e.g. if a node fails in the first metro network Ma, the two paths P2, P3 are lost, and the end-to-end connection between the endpoints 1, 2 fails because the encoded information subset transmitted over the intact first transmission path P1 is not sufficient for decoding the piece of information.
c) Excessive delays in the second access network Ab retard the encoded information on the disjoint section of the second path P2. As long as the other paths P1, P3 are not excessively delayed there is no impact on the end-to-end connection between the endpoints 1, 2 because the encoded information subsets transmitted over the intact first path P1 and the intact third path P3 are sufficient for decoding the piece of information.
d) On the other hand, excessive delays in the first metro network Ma delay the encoded information on the common path section of the second and the third path P2, P3 and impact the end-to-end connection between the endpoints 1, 2 because the encoded information subset transmitted over the intact first transmission path P1 is not sufficient for decoding the piece of information.
e) Interception is impossible on all disjoint sections of the transmission paths P1, P2, P3. For example, interception is impossible on the nodes of the access networks Aa and Ab.
f) The nodes of the first metro network Ma are not protected against interception since two paths P2, P3 of the three transmission paths P1, P2, P3 are available. The encoded information subsets transmitted over the second path P2 and the third path P3 are sufficient for decoding the piece of information.

Fig. 2 is a diagram illustrating an exemplary encoding and decoding technique of a piece of information according to an embodiment of the invention message. Line 1 gives a piece of information, the word "MESSAGE", which is to be transmitted from a sender to a receiver through a communication network. After each character of this word, a space is added, as shown in line 2, to provide room for a redundancy information as shown in line 3. Before adding the redundancy information of line 3 into the piece of information of line 2, each character of the redundancy information of line 3 is cyclically shifted seven positions to the right, as shown in line 4.

Line 5 gives the piece of information with redundancy generated by adding the redundancy information of line 4 to the piece of information of line 2. Let us assume that the piece of information is to be transmitted via N=3 at least partly disjoint transmission paths. Consequently, each character of the piece of information with redundancy according to line 5 is cyclically assigned to one of N=3 data streams, as is indicated in line 6 by the numbers 1, 2, 3 beneath the characters of the piece of information with redundancy in line 5. Thus the piece of information with redundancy in line 5 is separated/split into N=3 data streams given in lines 7, 8 and 9. None of these N=3 data streams allows to reconstruct the original piece of information shown in line 1.

Each of these N=3 data streams given in lines 7, 8 and 9 is transmitted through the communication network via an at least partly disjoint transmission path, e.g. via the paths P1, P2, P3 as described with reference to Fig. 1. It is possible that the first data stream given in line 7 is transmitted via the first transmission path P1, the second data stream given in line 8 is transmitted via the second transmission path P2, and the third data stream given in line 9 is transmitted via the third transmission path P3. Let us assume that during the transmission of the second data stream (line 8) via the second transmission path P2 fails so that the second data stream (line 8) is delayed or lost and consequently either arrives too late at the receiver or does not arrive at all at the receiver. Then line 10 shows the data arriving at the receiver, consisting of the data streams 7 and 9. The gaps in line 10 are caused by the missing data stream of line 8.

The receiver has to reconstruct (= decode) the original piece of information from the received data given in line 10. The received aggregated data shown in line 10 is separated into components of the original message (non-italic font) as shown in line 11 and the redundancy component (italic font) as shown in line 12. The cyclic shift of the redundancy component is undone, resulting in the redundancy component shown in line 14. The redundancy information given in line 12 is cyclically shifted seven positions to the left in order to undo the encoding shift, resulting in the redundancy information given in line 14. The redundancy information given in line 14 is combined with the components of the original message (non-italic font) as shown in line 13, which is a copy of line 11. The resulting combination is shown in line 15. After removing the gaps after each character from the combination of line 15, the original piece of information, the word "MESSAGE" of line 16, is received.

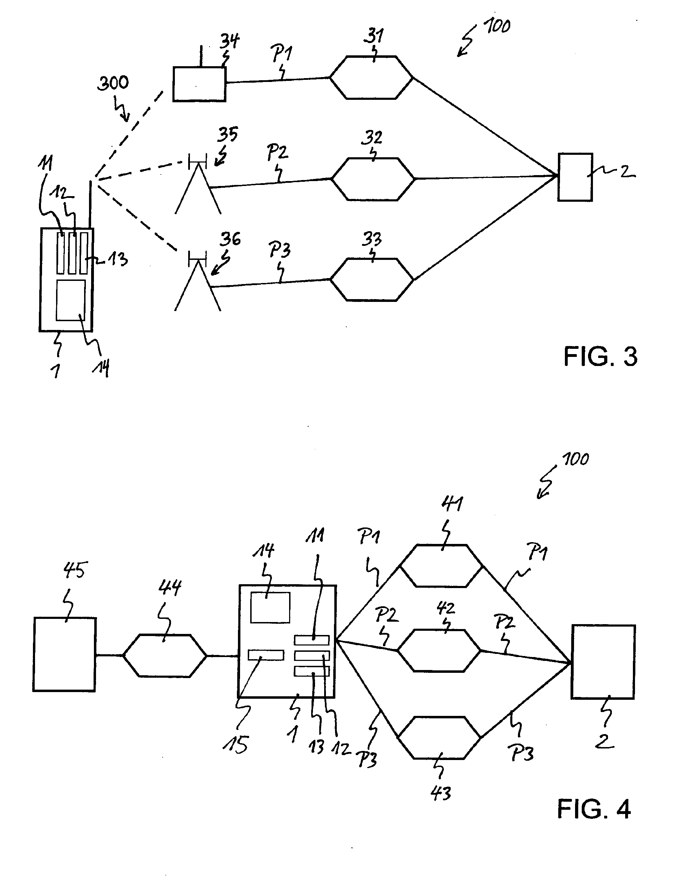

Fig. 3 is a diagram illustrating a transmission of information through a communication network 100 according to another embodiment of the invention. A sender 1 is represented by a wireless device such as an enhanced smartphone, e.g. an enhanced Blackberry or iPhone®. The sender 1 is enhanced in order to be able to maintain in parallel a WLAN connection to a WLAN router 34, a UMTS connection to a UMTS base station 35 and an EDGE connection to an EDGE base station 36 (WLAN = Wireless Local Area Network; UMTS = Universal Mobile Telecommunications System; EDGE = Enhanced Data rates for GSM Evolution; GSM = Global System for Mobile communications).

The sender 1 comprises a control unit 14 which performs the tasks of encoding a piece of information to be transmitted and splitting the encoded information into N=3 different subsets, i.e. data streams. Further the sender 1 comprises three interfaces 11, 12, 13 for transmitting each of the N=3 data streams via a disjoint air interface to the WLAN router 34, the UMTS base station 35 and the EDGE base station 36, respectively.

A first subset is received as a first data stream by the WLAN router 34. A second subset is received as a second data stream by the UMTS base station 35. A third subset is received as a third data stream by the EDGE base station 36. Each of the subsets is routed through a disjoint transmission path P1, P2, P3 with non-overlapping resources 31, 32, 33 of the communication network 100 to a second, receiving device 2 which may be a server or a second user terminal. Information encoding at the sender 1 is done in such a way that decoding the piece of information transmitted from the sender 1 to the receiver 2 is not feasible with any single subset (information stream) (privacy), while M=2 subsets (information streams) are sufficient for the receiver 2 to decode the piece of information (reliability, improved delay jitter).

Fig. 4 is a diagram illustrating a transmission of information through a communication network 100 according to another embodiment of the invention. A PC 45 is connected via a DSL access network 44 to a DSLAM 1 (= a router) for communication with a receiver 2, e.g. another PC. The sending PC 45 is triggered to send a piece of information, e.g. an email, to the receiving PC 2. The DSLAM comprises a DSL interface 15 for communication with the sending PC 45 via the DSL network 44. The DSLAM also comprises a control unit 14 which performs the tasks of encoding information received from the sending PC 45 and splitting the encoded information into N=3 different subsets (= data streams). Further the DSLAM comprises interfaces 11, 12, 13 for transmitting the N=3 data streams via completely disjoint transmission routes P1, P2, P3 to a receiver 2.

Each of the N=3 different data streams is transmitted between the DSLAM 1 and the receiver 2 via a different disjoint transmission path P1, P2, P3. Therefore, the transmission of the information between the DSLAM 1 and the receiver 2 provides large benefits in terms of privacy, reliability and delay jitter performance compared to Internet communication links as they are today. In the present example, it is only in the part of the communication network 100 between the sending PC 45 and the DSLAM 1, i.e. comprising the DSL access network 44, that a user of the PC 45 has to rely on the availability of the DSL access network 44 and to trust his DSL operator.

## Claims

1. A method of transmitting a piece of information from a sender (1) to a receiver (2) through a communication network (100) comprising N at least partly disjoint transmission paths (P1, P2, P3), wherein N is an integer with N > 2, the method comprising the steps of:
generating encoded information by adding redundancy information to the piece of information;
splitting the encoded information into N subsets of encoded information in a way that the piece of information can only be decoded from a combination of M subsets of the N subsets, wherein M is an integer with 1 < M < N;
sending each of the N subsets of encoded information via a different path of the N at least partly disjoint transmission paths (P1, P2, P3) from the sender (1) to the receiver (2);
receiving M subsets of the N subsets of encoded information by the receiver (2); and
decoding the piece of information from a combination of the received M subsets of encoded information.

2. The method of claim 1,
**characterised in**
**that** N > 2 and 1 < M < N.

3. The method of claim 1,
**characterised in**
**that** the N subsets of encoded information are sent parallelly via the N different at least partly disjoint transmission paths (P1, P2, P3) from the sender (1) to the receiver (2).

4. The method of claim 1,
**characterised in**
**that** the communication network (100) is an end-to-end network comprising fixed and/or mobile sub-networks.

5. The method of claim 1,
**characterised in**
**that** the communication network (100) is the Internet.

6. The method of claim 1,
**characterised in**
**that** the encoded information is generated and the encoded information is split into N subsets by using a technique used for Forward Error Correction or for Hybrid Automatic Repeat Request.

7. The method of claim 1,
**characterised in**
**that** the method further comprises the step of:
establishing the N at least partly disjoint transmission paths (P1, P2, P3) between the sender (1) and the receiver (2).

8. The method of claim 1,
**characterised in**
**that** each of the N at least partly disjoint transmission paths (P1, P2, P3) comprises different network resources.

9. A sender (1) for transmitting of a piece of information to a receiver (2) through a communication network (100) comprising N at least partly disjoint transmission paths (P1, P2, P3) wherein N is an integer with N > 2, the sender (1) comprising a control unit (14) adapted to generate encoded information by adding redundancy information to the piece of information and split the encoded information into N subsets of encoded information in a way that the piece of information can only be decoded from a combination of M subsets of the N subsets wherein M is an integer with 1 < M < N, and one or more interfaces (11, 12, 13) adapted to send each of the N subsets of encoded information via a different path of the N at least partly disjoint transmission paths (P1, P2, P3) from the sender (1) to the receiver (2).

10. The sender (1) of claim 9,
**characterised in**
**that** the sender (1) is a user terminal or an internal network device.

11. A receiver (2) for receiving a piece of information from a sender (1) through a communication network (100) comprising N at least partly disjoint transmission paths (P1, P2, P3), wherein N is an integer with N > 2, the receiver (2) comprising one or more interfaces (21, 22, 23) adapted to receive M subsets of N subsets of encoded information, wherein M is an integer with 1 < M > N, wherein the N subsets of encoded information comprise the piece of information and added redundancy information in a way that the piece of information can only be decoded from a combination of M subsets of the N subsets, and wherein each of the M subsets of encoded information is received via a different path of the N at least partly disjoint transmission paths (P1, P2, P3), and a control unit (24) adapted to decode the piece of information from a combination of the received M subsets of encoded information.

12. The receiver (2) of claim 11,
**characterised in**
**that** the receiver (2) is a user terminal or an internal network device.
